# EUROPÄISCHE PATENTSCHRIFT

(11) **EP 1 874 562 B1**
(45) Veröffentlichungstag und Bekanntmachung des Hinweises auf die Patenterteilung: **17.09.2008**
(21) Anmeldenummer: 06742718.7
(22) Anmeldetag: 27.04.2006
(51) Int. Cl.: B60B 33/00, B60B 33/02

(54) **LENKROLLE MIT ZWILLINGSRÄDERN**
TWIN-WHEEL CASTER
ROULETTE DE GUIDAGE A ROUES JUMELEES

(30) Priorität: 29.04.2005 DE 102005020438
(43) Veröffentlichungstag der Anmeldung: 09.01.2008
(73) Patentinhaber: GROSS + FROELICH GMBH&CO. KG, 71263 Weil der Stadt (DE)
(72) Erfinder: BERGER, Ernst, 71130 Jettingen (DE); VON BORDELIUS, Ralph, 71083 Herrenberg (DE)
(74) Vertreter: WOLF & LUTZ
(86) Internationale Anmeldenummer: PCT/EP2006/003915
(87) Internationale Veröffentlichungsnummer: WO 2006/117128

(56) Entgegenhaltungen:
- EP-A- 0 458 446
- EP-A- 1 110 757
- EP-A- 1 535 756
- DE-A1- 2 927 549
- US-A- 5 537 715

## Beschreibung

Die Erfindung betrifft eine Lenkrolle mit Zwillingsrädern, mit einem Gehäuse mit einer im Wesentlichen vertikal ausgerichteten, oberseitigen Zapfenöffnung zur Aufnahme eines Drehzapfens, um die Rolle mit einem Möbelstück oder einem anderen Gegenstand zu verbinden, mit einer schachtförmigen, zu der Zapfenöffnung lateral versetzt angeordneten unterseitigen Schieberöffnung zur Aufnahme eines über eine Feder in dem Gehäuse abgestützten Schiebers, der eine im Wesentlichen quer zu der Schieberöffnung ausgerichtete Durchtrittsöffnung für einen die Räder tragenden Achsbolzen aufweist und der zwischen einer Rollstellung und einer Bremsstellung verschiebbar in dem Gehäuse angeordnet ist, und mit Ausnehmungen in den die Schieberhoffnung begrenzenden Wandpartien für den Durchtritt des Achsbolzens.

Eine solche Rolle ist aus der gattungsgemäßen DE 29 27 549 bekannt.

Derartige Rollen werden in großem Umfang beispielsweise für rollbare Bürosessel verwendet, wobei zwischen gebremsten und ungebremsten Rollen unterschieden wird. Eine gebremste Rolle weist eine Rollstellung im belasteten Zustand auf, etwa wenn eine Person auf einem mit derartigen Rollen versehenen Sessel sitzt, um die gewünschte Mobilität zu ermöglichen, und aus Sicherheitsgründen eine Bremsstellung im unbelasteten Zustand, um ein unbeabsichtigtes und unbemerktes Wegrollen des Sessels zu verhindern. Um dies zu verwirklichen ist es bekannt, einen Federmechanismus in die Rolle zu integrieren, bei dem in einfacher Ausgestaltung eine im Gehäuse gelagerte Schraubenfeder direkt auf den begrenzt in einem Gehäuselangloch verschiebbaren Achsbolzen einwirkt und die Rollen durch dessen Verschieben bei einem Wechsel des Belastungszustands mit einem Bremsorgan des Gehäuses in Eingriff bringt oder von diesem löst. Ein Nachteil dieser Lösung besteht darin, dass der Achsbolzen durch Reibung an der Feder einem vergleichsweise hohen Verschleiß unterliegt, der bis zu einem Bruch des Achsbolzens führen kann. Es ist weiterhin eine Rolle bekannt, bei der der Achsbolzen in einem Schieber gelagert ist, der über eine Feder im Gehäuse abgestützt ist, wobei der Wechsel zwischen Roll- und Bremsstellung wie oben genannt vorgenommen wird. Der Achsbolzen ist hier in Langlöchern in den die Schieberöffnung begrenzenden Wandpartien des Gehäuses geführt und sein Verstellweg ist durch die oberen und unteren Ränder dieser Langlöcher begrenzt. Dies erlaubt eine nur unzureichende Führung des Schiebers, so dass der Achsbolzen bei schräger Belastung leicht gegenüber dem Gehäuse verkippen kann, wodurch in Folge auch die Räder relativ zum Gehäuse verkippen, was neben einer unbefriedigenden ästhetischen Erscheinung auch zu Funktionsstörungen der Rolle führen kann. Bei stoßartiger Belastung schlägt der Achsbolzen gegen den oberen Rand des Langlochs und kann dadurch die vergleichsweise wenig stabile Gehäusewandung beschädigen. Weiterhin besteht bei dieser bekannten Rolle durch die eben und senkrecht zum Boden verlaufenden Gehäusewandungen kaum ein Schutz gegen das Eindringen von Verschmutzungen in den Lagerbereich des Achsbolzens und umgekehrt gegen das zu einer Verschmutzung der Stellfläche führende Austreten von Schmierfett.

Beispiele derartiger Rollen sind aus der DE 2927 549 A1, EP1 110 757 A, EP 0 458 446 A, US 5 537 715 A und EP1535756 A bekannt.

Ausgehend hiervon besteht die Aufgabe der vorliegenden Erfindung darin, eine Rolle der eingangs genannten Art bereit zu stellen, die mit einfachen Mitteln eine zuverlässige Bremswirkung ermöglicht und gleichzeitig unempfindlich gegenüber Verschmutzungen ist.

Zur Lösung dieser Aufgabe wird die in Patentanspruch 1 angegebene Merkmalskombinations vorgeschlagen. Vorteilhafte Ausgestaltungen und Weiterbildungen der Erfindung ergeben sich aus den abhängigen Ansprüchen.

Gemäß der Erfindung weist das Gehäuse in seinem unteren Bereich zwei an die Schieberöffnung anschließende, von der Gehäusewandung lateral abstehende Vorsprünge auf, an denen sich Naben der Räder in der Bremsstellung reibschlüssig abstützen. Die Vorsprünge ermöglichen somit nicht nur gleichsam als Bremsbacken ein Bremsen der Rolle, sondern schützen durch ihr Abdecken der unteren Gehäusepartie und des Achsbolzens den Federmechanismus und den Bereich des Achsbolzens wirksam vor Verschmutzungen bzw. verhindern ein Austreten von Schmierfett. Zweckmäßig erstrecken sich die Vorsprünge zumindest über die Breite der Schieberöffnung. Die Vorsprünge verstärken damit das Gehäuse im Bereich der Schieberöffnung. In Richtung der Räder können sich die Vorsprünge so weit erstrecken, dass ein Freilauf der Räder noch gewährleistet ist.

Eine hohe Bremswirkung ergibt sich dann, wenn die relative Anlagefläche zwischen Radnabe und Vorsprung möglichst groß ist. In bevorzugter Ausgestaltung der Erfindung ist daher vorgesehen, dass die von der Gehäusewandung lateral abstehenden Vorsprünge an die Ausnehmungen in den die Schieberöffnung begrenzenden Wandpartien anschließende, teilkreisförmige, vorzugsweise halbkreisförmige, Vertiefungen aufweisen, an denen Außenseitenpartien der Naben der Räder in der Bremsstellung über einen Teilumfang flächig anliegen. Der Radius der Ausnehmung entspricht somit im Wesentlichen dem Radius der Nabe.

Eine hohe Belastbarkeit der Rolle ist dann gegeben, wenn in bevorzugter Weiterbildung der Erfindung der Schieber in der Rollstellung am Boden der Schieberöffnung abgestützt ist. Es findet somit kein direkter Kontakt zwischen dem Gehäuse und dem Achsbolzen statt, der das Gehäuse bei einer Stoßbelastung beschädigen könnte, sondern eine vergleichsweise großflächige Anlage des Schiebers an dem großflächigen Boden der Schieberöffnung. Weiterhin kann in dem Gehäuse ein an die Schieberöffnung anschließendes Sackloch für einen an dem Schieber angeordneten Rohrstutzen, dessen Länge kürzer ist als die freie Länge der in ihm aufgenommenen Feder, vorgesehen sein. Der Rohrstutzen erleichtert die Montage, da er die Feder beim Einführen des Schiebers in das Gehäuse verliersicher aufnimmt, und er vergrößert die im Gehäuse geführte Länge des Schiebers, wodurch die Stabilität der Anordnung weiter erhöht wird. Diesem Zweck dient auch eine bevorzugte Ausgestaltung der Erfindung, wonach der Schieber einen im Wesentliches rechteckigen Querschnitt mit zwei quer zur Durchtrittsöffnung des Achsbolzens angeordneten, einstückig angeformten Führungsrippen auf. Alternativ kann der Schieber einen im Wesentlichen hantelförmigen Querschnitt aufweisen, wobei die jeweils T-förmigen Endpartien in entsprechende Hinterschneidungen der Schieberöffnung eingreifen und ein Aufhebein des Gehäuses unter Belastung verhindern.

In weiter bevorzugter Ausgestaltung der Erfindung ist der Achsbolzen in die Durchtrittsöffnung des Schiebers eingepresst, wobei er zum Erzielen eines Form- und Kraftschlusses eine Rändelung oder gleichartige Profilierung an seiner im Schieber gelagerten Partie aufweisen kann. Ein besonders sicherer Sitz der Räder auf dem Achsbolzen ist dann gegeben, wenn der Achsbolzen auf beiden Seiten des Gehäuses mit zwei im Abstand voneinander angeordneten Hinterschneidungen versehen ist, mit denen Wülste auf der Innenseite der rohrförmigen Naben im Eingriff stehen. Die Naben der Räder können sich axial bis in den Bereich der die Schieberöffnung begrenzenden Wandpartien erstrecken.

Das Gehäuse und/oder der Schieber sind vorzugsweise als Spritzgussteile aus Kunststoff ausgebildet. Während aus Gründen der mechanischen Festigkeit bisher überwiegend ein Polyamid als Kunststoff gewählt wurde, ermöglicht die erfindungsgemäße Gestaltung des Gehäuses die Verwendung eines vergleichsweise kostengünstigen Polypropylen-Kunststoffes.

Im Folgenden wird die Erfindung anhand eines in der Zeichnung schematisch dargestellten Ausführungsbeispiels näher erläutert. Es zeigen
- Fig. 1a: eine Ansicht eines Ausführungsbeispiels der erfindungsgemäßen Lenkrolle von unten;
- Fig. 1b: einen Längsschnitt durch die Rolle entlang der Linie b-b in Fig. 1a;
- Fig. 1c: eine Seitenansicht der Rolle;
- Fig. 1d: einen Schnitt durch die Rolle entlang der Linie d-d in Fig. 1c;
- Fig. 2a: eine Ansicht des Gehäuses der in Fig. 1 dargestellten Rolle von unten;
- Fig. 2b: eine Seitenansicht des Gehäuses;
- Fig. 2c: einen Schnitt durch das Gehäuse entlang der Linie c-c in Fig. 2b;
- Fig. 3a: eine Ansicht des Schiebers der Rolle von unten;
- Fig. 3b: eine Seitenansicht des Schiebers;
- Fig. 3c: einen Schnitt durch den Schieber entlang der Linie c-c in Fig. 3b;
- Fig. 3d: eine Ansicht des Schiebers von oben; und
- Fig. 4: eine perspektivische Explosionsdarstellung der Rolle.

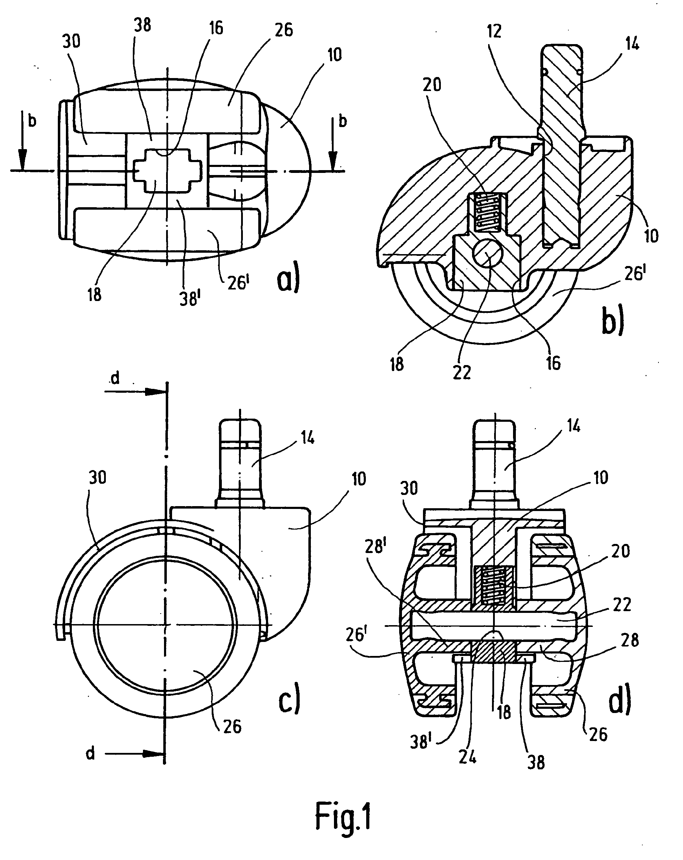

Die in der Zeichnung dargestellte Rolle (Fig. 1) besteht im Wesentlichen aus einem Gehäuse 10 mit einer Zapfenöffnung 12 zur Aufnahme eines Drehzapfens 14, mittels dessen die Rolle an einem Möbelstück oder dergleichen drehbar befestigt wird, und mit einer Schieberöffnung 16 zur Aufnahme eines Schiebers 18, der entgegen der Kraft einer Feder 20 zwischen einer Rollstellung und einer Bremsstellung vertikal in dem Gehäuse 10 verschiebbar ist, aus einem Achsbolzen 22, der in eine Durchtrittsöffnung 24 des Schiebers 18 eingepresst und quer zu der Schieberöffnung 16 ausgerichtet ist, und aus zwei Rädern 26, 26' mit rohrförmigen Naben 28, 28', die auf die freien Enden des Achsbolzens 22 aufgesteckt sind und sich auf diesem drehen. Die Räder bestehen aus einem Radkörper mit aufgespritzten Laufflächen aus einem dem Einsatzzweck angepassten Material. Ein bogenförmiges Dach 30 des Gehäuses 10 überdeckt den oberen Bereich der Räder 26, 28'.

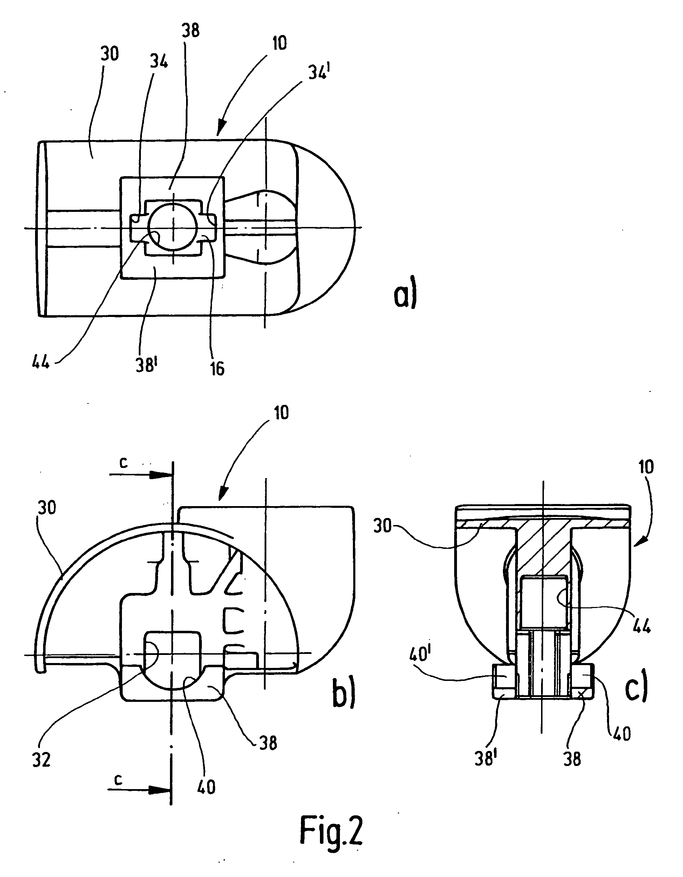

Das Gehäuse (Fig. 2) weist im Bereich der Schieberöffnung 16 Ausnehmungen 32 auf, die von dem Schieber 18 durchsetzt werden und diesen führen. Quer dazu weist das Gehäuse Nuten 34, 34' auf, in die an den Schieber 18 angeformte Rippen 36, 36' eingreifen. Auch diese Maßnahme dient der besseren Führung des Schiebers 18 und erhöht die Belastbarkeit der Anordnung. An dem unteren Ende der Schieberöffnung 16 stehen zwei Vorsprünge 38, 38' lateral von der Gehäusewandung ab. Diese Vorsprünge 38, 38' erfüllen drei Funktionen gleichzeitig. Zum einen weisen sie teilkreisförmige Vertiefungen 40, 40' auf. Diese weisen einen Krümmungsradius auf, der dem Radius der benachbarten Partien der Naben 28, 28' entspricht und bilden in der Bremsstellung der Rolle eine einen Reibschluss vermittelnde Anlagefläche für diese Nabenpartien. Weiterhin bilden sie eine laterale Abdeckung für die Naben und den darüber liegenden Gehäusebereich, so dass ein Eintreten von Verschmutzungen dorthin verhindert wird. Schließlich verstärken sie das Gehäuse 10 im Bereich der Schieberöffnung 16 derart, dass die den Schieber 18 aufnehmende Gehäusepartie vergleichsweise schmal ausgebildet werden kann. Hierdurch können die Naben 28, 28' der Räder besonders lang ausgebildet und bis in den Bereich der Ausnehmungen 32 geführt werden, wodurch sie eine vergleichsweise große Aufnahmetiefe für den Achsbolzen 22 aufweisen können, was die Stabilität und Tragfähigkeit der Rolle erhöht. Insgesamt kann durch diese Maßnahmen der Materialeinsatz für die Herstellung des Gehäuses 10 bei Einhaltung geforderter Belastbarkeitswerte erheblich vermindert werden.

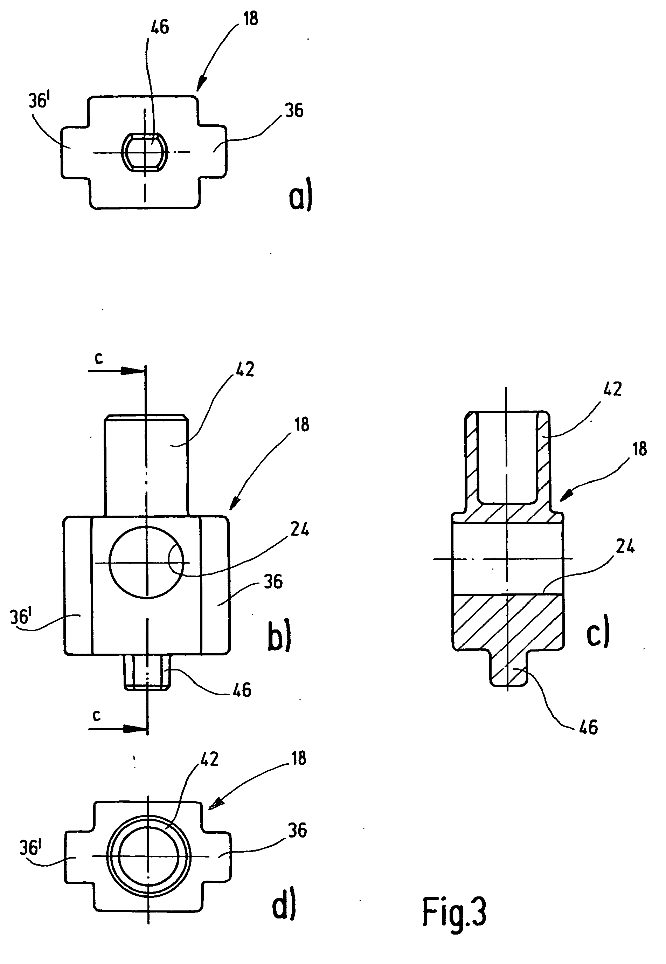

Der Schieber 18 (Fig. 3) weist einen Rohrstutzen 42 zur Aufnahme der Feder 20 auf, der in ein Sackloch 44 im Boden der Schieberöffnung 16 eintaucht und etwas kürzer ist als die freie Länge der Feder 20. Die Feder 20 stützt sich am Boden des Sackloches 44 einerseits und einer oberen Wandungspartie des Schiebers 18 andererseits ab. Der Schieber 18 weist an seinem bodenseitigen Ende weiterhin einen kurzen Zapfenansatz 46 auf. Dieser erleichtert die maschinelle Handhabung des Schiebers 18 bei der Montage der Rolle. Durch die angeformten Rippen 36, 36' und den Rohrstutzen 42 ergibt sich eine sehr stabile und belastbare Führung des Schiebers 18 in dem komplementär geformten Gehäuse 10. In der Rollstellung liegt die Oberseite des Schiebers 18 am Boden der Schieberöffnung 16 an, wobei eine vergleichsweise große Anlagefläche vorhanden ist, so dass bei Schrägbelastungen ein Verkippen des Schiebers 18 und damit der Räder 26, 26' minimiert wird und Stoßbelastungen nicht zu einer Beschädigung des Gehäuses 10 führen.

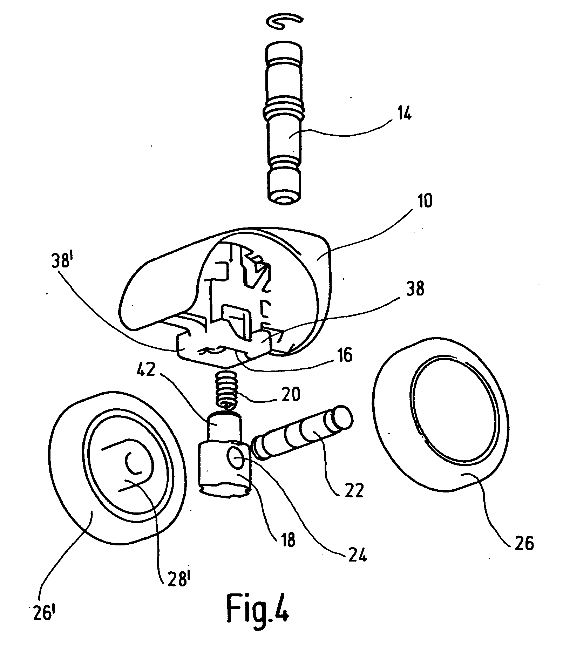

Die Montage der Rolle lässt sich anhand der Fig. 4 erläutern. Zunächst wird die Feder 20 in den Rohrstutzen 42 des Schiebers 18 eingesetzt und mit diesem zusammen bis zur Rollstellung in die Schieberöffnung 16 eingeführt, so dass die Durchtrittsöffnung 24 für den Achsbolzen 22 freigegeben ist und zwischen dem Achsbolzen 22 und den Vorsprüngen 38, 38' hinreichend Freiraum für die Naben der Räder vorhanden ist. Dann wird der Achsbolzen 22 zentriert in die Durchtrittsöffnung 24 eingepresst. Schließlich werden die Räder 26, 26' mit ihren rohrförmigen Naben 28, 28' auf den Achsbolzen 22 aufgeschoben, wobei sie mit Wülsten in Hinterschneidungen oder Nuten im Achsbolzen 22 einrasten. Das Einsetzen des Drehzapfens 14 in die Zapfenöffnung 12 kann vor oder nach der Montage des Schiebers, des Achsbolzens und der Räder erfolgen.

Zusammenfassend ist folgendes festzuhalten: Die Erfindung betrifft eine Lenkrolle mit Zwillingsrädern 26, 26', mit einem Gehäuse 10 mit einer im Wesentlichen vertikal ausgerichteten, oberseitigen Zapfenöffnung 12 zur Aufnahme eines Drehzapfens 14, um die Rolle mit einem Möbelstück oder einem anderen Gegenstand zu verbinden, mit einer schachtförmigen, zu der Zapfenöffnung 12 lateral versetzt angeordneten unterseitigen Schieberöffnung 16 zur Aufnahme eines über eine Feder 20 in dem Gehäuse 10 abgestützten Schiebers 18, der eine im Wesentlichen quer zu der Schieberöffnung 16 ausgerichtete Durchtrittsöffnung 24 für einen die Räder 26, 26' tragenden Achsbolzen 22 aufweist und der zwischen einer Rollstellung und einer Bremsstellung verschiebbar in dem Gehäuse 10 angeordnet ist, und mit Ausnehmungen 32 in den die Schieberöffnung begrenzenden Wandpartien für den Durchtritt des Achsbolzens 22. Um mit einfachen Mitteln eine zuverlässige Bremswirkung zu ermöglichen und gleichzeitig Verschmutzungen von den inneren Gehäusebereichen fern zu halten, wird gemäß der Erfindung vorgeschlagen, dass das Gehäuse 10 in seinem unteren Bereich zwei an die Schieberöffnung 16 anschließende, von der Gehäusewandung lateral abstehende Vorsprünge 38, 38' aufweist, an denen sich Naben 28, 28' der Räder 26, 26' in der Bremsstellung reibschlüssig abstützen.

## Patentansprüche

1. Lenkrolle mit Zwillingsrädern (26, 26'), mit einem Gehäuse (10) mit einer im Wesentlichen vertikal ausgerichteten, oberseitigen Zapfenöffnung (12) zur Aufnahme eines Drehzapfens (14), um die Rolle mit einem Möbelstück oder einem anderen Gegenstand zu verbinden, mit einer schachtförmigen, zu der Zapfenöffnung (12) lateral versetzt angeordneten unterseitigen Schieberöffnung (16) zur Aufnahme eines über eine Feder (20) in dem Gehäuse (10) abgestützten Schiebers (18), der eine im Wesentlichen quer zu der Schieberöffnung (16) ausgerichtete Durchtrittsöffnung (24) für einen die Räder (26, 26') tragenden Achsbolzen (22) aufweist und der zwischen einer Rollstellung und einer Bremsstellung verschiebbar in dem Gehäuse (10) angeordnet ist, und mit Ausnehmungen (32) in den die Schieberöffnung begrenzenden Wandpartien für den Durchtritt des Achsbolzens (22), **dadurch gekennzeichnet, dass** das Gehäuse (10) in seinem unteren Bereich zwei an die Schieberöffnung (16) anschließende, von der Gehäusewandung lateral abstehende Vorsprünge (38, 38') aufweist, an denen sich Naben (28, 28') der Räder (26, 26') in der Bremsstellung reibschlüssig abstützen.

2. Lenkrolle nach Anspruch 1, **dadurch gekennzeichnet, dass** sich die Vorsprünge (38, 38') zumindest über die Breite der Schieberöffnung (16) erstrecken.

3. Lenkrolle nach Anspruch 1 oder 2, **dadurch gekennzeichnet, dass** die von der Gehäusewandung lateral abstehenden Vorsprünge (38, 38') an die Ausnehmungen (32) in den die Schieberöffnung (16) begrenzenden Wandpartien anschließende, teilkreisförmige, vorzugsweise halbkreisförmige, Vertiefungen (40) aufweisen, an denen Außenseitenpartien der Naben (28, 28') der Räder (26, 26') in der Bremsstellung über einen Teilumfang flächig anliegen.

4. Lenkrolle nach einem der Ansprüche 1 bis 3, **dadurch gekennzeichnet, dass** der Schieber (18) in der Rollstellung am Boden der Schieberöffnung (16) abgestützt ist.

5. Lenkrolle nach einem der Ansprüche 1 bis 4, **dadurch gekennzeichnet, dass** in dem Gehäuse (10) ein an die Schieberöffnung (16) anschließendes Sackloch (44) für einen an dem Schieber (18) angeordneten Rohrstutzen (42), dessen Länge kürzer ist als die freie Länge der in ihm aufgenommenen Feder (20), vorgesehen ist.

6. Lenkrolle nach einem der Ansprüche 1 bis 5, **dadurch gekennzeichnet, dass** der Schieber (18) einen im Wesentlichen rechteckigen Querschnitt mit zwei quer zur Durchtrittsöffnung (24) des Achsbolzens (22) angeordneten, einstückig angeformten Führungsrippen (36, 36') aufweist.

7. Lenkrolle nach einem der Ansprüche 1 bis 5, **dadurch gekennzeichnet, dass** der Schieber (18) einen im Wesentlichen hantelförmigen Querschnitt aufweist, wobei die jeweils T-förmigen Endpartien in entsprechende Hinterschneidungen der Schieberöffnung (16) eingreifen und ein Aufhebeln des Gehäuses (10) unter Belastung verhindern.

8. Lenkrolle nach einem der Ansprüche 1 bis 7, **dadurch gekennzeichnet, dass** der Achsbolzen (22) in die Durchtrittsöffnung (24) des Schiebers (18) eingepresst ist.

9. Lenkrolle nach einem der Ansprüche 1 bis 8, **dadurch gekennzeichnet, dass** der Achsbolzen (22) auf beiden Seiten des Gehäuses (10) mit zwei im Abstand voneinander angeordneten Hinterschneidungen versehen ist, mit denen Wülste auf der Innenseite der rohrförmigen Naben (28, 28') im Eingriff stehen.

10. Lenkrolle nach einem der Ansprüche 1 bis 9, **dadurch gekennzeichnet, dass** sich die Naben (28, 28') der Räder (26, 26') axial bis in den Bereich der die Schieberöffnung (16) begrenzenden Wandpartien erstrecken.

11. Lenkrolle nach einem der Ansprüche 1 bis 10, **dadurch gekennzeichnet, dass** das Gehäuse (10) und/oder der Schieber (18) aus einem Polypropylen- oder Polyamid-Kunststoff bestehen.

## Claims

1. A twin-wheel (26, 26') caster, with a housing (10) having an essentially vertically oriented, top-side pin opening (12) for receiving a pivot pin (14) in order to connect the caster to an item of furniture or to another object, with a shaft-shaped, bottom-side slide opening (16) which is offset laterally with respect to the pin opening (12) and is intended for receiving a slide (18) which is supported in the housing (10) via a spring (20), has a passage opening (24), which is oriented essentially transversely with respect to the slide opening (16), for an axle pin (22) which bears the wheels (26, 26') , and which is arranged in the housing (10) in a manner such that it can be displaced between a rolling position and a braking position, and with recesses (32) in the wall portions bounding the slide opening, for the passage of the axle pin (22), **characterized in that** the housing (10) has, in its lower region, two projections (38, 38') which adjoin the slide opening (16), protrude laterally from the housing wall and on which hubs (28, 28') of the wheels (26, 26') are frictionally supported in the braking position.

2. The caster as claimed in claim 1, **characterized in that** the projections (38, 38') extend at least over the width of the slide opening (16).

3. The caster as claimed in claim 1 or 2, **characterized in that** the projections (38, 38') which protrude laterally from the housing wall have partially circular, preferably semicircular, depressions (40) which adjoin the recesses (32) in the wall portions bounding the slide opening (16) and on which outside portions of the hubs (28, 28') of the wheels (26, 26') bear in a surface-to-surface manner over part of the circumference in the braking position.

4. The caster as claimed in one of claims 1 to 3, **characterized in that** the slide (18) is supported in the rolling position on the base of the slide opening (16).

5. The caster as claimed in one of claims 1 to 4, **characterized in that** a blind hole (44) which adjoins the slide opening (16) and is intended for a socket piece (42) which is arranged on the slide (18) and the length of which is shorter than the free length of the spring (20) accommodated in it is provided in the housing (10).

6. The caster as claimed in one of claims 1 to 5, **characterized in that** the slide (18) has an essentially rectangular cross section with two integrally formed guide ribs (36, 36' ) which are arranged transversely with respect to the passage opening (24) of the axle pin (22).

7. The caster as claimed in one of claims 1 to 5, **characterized in that** the slide (18) has an essentially dumbbell-shaped cross section, with the respective T-shaped end portions engaging in corresponding undercuts of the slide opening (16), and preventing the housing (10) from being levered apart under load.

8. The caster as claimed in one of claims 1 to 7, **characterized in that** the axle pin (22) is pressed into the passage opening (24) of the slide (18).

9. The caster as claimed in one of claims 1 to 8, **characterized in that** the axle pin (22) is provided on both sides of the housing (10) with two undercuts which are arranged at a distance from each other and with which beads on the inside of the tubular hubs (28, 28') are in engagement.

10. The caster as claimed in one of claims 1 to 9, **characterized in that** the hubs (28, 28') of the wheels (26, 26') extend axially into the region of the wall portions which bound the slide opening (16).

11. The caster as claimed in one of claims 1 to 10, **characterized in that** the housing (10) and/or the slide (18) is/are composed of a polypropylene or polyamide plastic.

## Revendications

1. Roulette de guidage à roues jumelées (26, 26'), comportant un boîtier (10) avec sur le dessus une ouverture de tourillon (12) dirigée essentiellement verticalement et destinée à recevoir un tourillon (14), afin de relier la roulette à un meuble ou un autre objet, avec sur le dessous une ouverture de coulisseau (16) en forme de puits, disposée en étant latéralement décalée par rapport à l'ouverture de tourillon (12) et destinée à recevoir un coulisseau (18) s'appuyant par l'intermédiaire d'un ressort (20) dans le boîtier (10), coulisseau qui présente une ouverture de passage (24), orientée essentiellement transversalement à l'ouverture de coulisseau (16), pour un boulon-axe (22) portant les roues (26, 26'), et coulisseau qui est disposé dans le boîtier (10) à coulissement entre une position de roulement et une position de freinage, et avec des évidements (32) dans les parties de paroi délimitant l'ouverture de coulisseau, pour le passage du boulon-axe (22), **caractérisée en ce que** le boîtier (10) présente dans sa région inférieure deux saillies (38, 38') se raccordant à l'ouverture de coulisseau (16) et partant latéralement de la paroi du boîtier, contre lesquelles des moyeux (28, 28') des roues (26, 26') s'appuient par friction dans la position de freinage.

2. Roulette de guidage selon la revendication 1, **caractérisée en ce que** les saillies (38, 38') s'étendent au moins sur la largeur de l'ouverture de coulisseau (16).

3. Roulette de guidage selon la revendication 1 ou 2, **caractérisée en ce que** les saillies (38, 38') partant latéralement de la paroi du boîtier présentent des creux (40) en forme de cercle partiel, de préférence semi-circulaires, qui se raccordent aux évidements (32) dans les parties de paroi délimitant l'ouverture de coulisseau et contre lesquels des parties de côté extérieur des moyeux (28, 28') des roues (26, 26') s'appuient à plat sur une partie de la circonférence dans la position de freinage.

4. Roulette de guidage selon l'une des revendications 1 à 3, **caractérisée en ce que** le coulisseau (18), dans la position de roulement, s'appuie contre le fond de l'ouverture de coulisseau (16).

5. Roulette de guidage selon l'une des revendications 1 à 4, **caractérisée en ce qu'**un trou borgne (44) se raccordant à l'ouverture de coulisseau (16) est prévu dans le boîtier (10), pour un embout tubulaire (42) qui est disposé sur le coulisseau (18) et dont la longueur est inférieure à la longueur libre du ressort (20) reçu dans cet embout.

6. Roulette de guidage selon l'une des revendications 1 à 5, **caractérisée en ce que** le coulisseau (18) présente une section essentiellement rectangulaire avec deux nervures de guidage (36, 36') solidairement formées en étant disposées transversalement à l'ouverture de passage (24) du boulon-axe (22).

7. Roulette de guidage selon l'une des revendications 1 à 5, **caractérisée en ce que** le coulisseau (18) présente une section essentiellement en forme d'haltère, sachant que les parties terminales respectives en forme de T s'engagent dans des contre-dépouilles correspondantes de l'ouverture de coulisseau (16) et empêchent le boîtier (10) d'être ouvert de force sous l'action d'une sollicitation.

8. Roulette de guidage selon l'une des revendications 1 à 7, **caractérisée en ce que** le boulon-axe (22) est emmanché dans l'ouverture de passage (24) du coulisseau (18).

9. Roulette de guidage selon l'une des revendications 1 à 8, **caractérisée en ce que** le boulon-axe (22) est pourvu de part et d'autre du boîtier (10) de deux contre-dépouilles disposées à distance entre elles, avec lesquelles sont en prise des bourrelets prévus sur le côté intérieur des moyeux tubulaires (28, 28').

10. Roulette de guidage selon l'une des revendications 1 à 9, **caractérisée en ce que** les moyeux (28, 28') des roues (26, 26') s'étendent axialement jusque dans la région des parties de paroi délimitant l'ouverture de coulisseau (16).

11. Roulette de guidage selon l'une des revendications 1 à 10, **caractérisée en ce que** le boîtier (10) et/ou le coulisseau (18) sont constitués d'une matière plastique à base de polypropylène ou de polyamide.
